# EUROPÄISCHE PATENTSCHRIFT

(11) **EP 2 088 230 B1**
(45) Veröffentlichungstag und Bekanntmachung des Hinweises auf die Patenterteilung: **30.09.2009**
(21) Anmeldenummer: 08151255.0
(22) Anmeldetag: 11.02.2008
(51) Int. Cl.: D06B 3/10, B60N 2/58, D06M 13/00, D06M 23/00

(54) **Verfahren zum Herstellen einer textilen Bahn für Sitzbezüge**
Method for manufacturing a textile strip for seat coverings
Procédé de fabrication d'une bande textile pour toile de siège

(43) Veröffentlichungstag der Anmeldung: 12.08.2009
(73) Patentinhaber: Mattes & Ammann GmbH & Co. KG, 72436 Messstetten (Tieringen) (DE)
(72) Erfinder: Larsén, Christoph Sven, 72469 Meßstetten (Tieringen) (DE)
(74) Vertreter: Raffay & Fleck

(56) Entgegenhaltungen:
- EP-A- 1 568 485
- WO-A-20/04055262
- WO-A-20/05065369
- WO-A-20/05082616
- US-A- 2 627 901
- US-A1- 2003 154 553

## Beschreibung

### Technisches Gebiet

Die vorliegende Erfindung betrifft ein Verfahren zum Herstellen einer textilen Bahn für Sitzbezüge nach dem Oberbegriff des Anspruches 1, sowie den Sitzbezug selbst.

### Stand der Technik

Ein derartiges Verfahren ist in vielen verschiedenen Varianten im Stand der Technik bekannt, so z.B. aus der WO 2004/055262 A und der EP-A- 1568 485, die Martindale Scheuertouren von 50000 bzw. max. 100.000 angeben. Dabei werden die unterschiedlichsten Garne, wie Industriegarne, Flachstrickgarne, Rundstrickgarne etc., eingesetzt. Bekanntermaßen bedarf jedes Garn unabhängig von Konstruktion, Rohstoff und Feinheit einer zusätzlichen Ausrüstung - einer sog. Avivage. Sie bestimmt neben anderen Merkmalen maßgeblich die Leistungsfähigkeit des Garns. Die Avivage wird als Textilhilfsmittel häufig auch als Gleitmittel bezeichnet und setzt sich im Wesentlichen aus Ölen, Fetten, Wachs oder Seifen etc. zusammen. Auch wirkt die Avivage als Schutzhülle, wodurch sich beispielsweise Kühleffekte etc. ergeben und statische Aufladungen verhindert werden können. Die Avivagen werden dabei nicht nur aus Gründen der nachgelagerten Verarbeitung aufgebracht, sondern können auch ihre Ursache im Herstellungsprozess des Garnes an sich haben.

In grundsätzlicher Hinsicht ist es natürlich immer wünschenswert, dass die Endprodukte solcher Herstellungsverfahren hervorragende Eigenschaften und insbesondere eine lange Lebensdauer aufweisen. Letzteres gilt gerade für die Kraftfahrzeugsitzbezüge, insbesondere die Fahrersitze, die im Alltagsgeschehen besonders strapaziert werden und häufig durch Abrieb an prominenten Stellen unschön aussehen.

### Darstellung der Erfindung

Der vorliegenden Erfindung liegt deshalb die Aufgabe zugrunde, das eingangs genannte Verfahren derart zu verbessern, dass sein Endprodukt, die textile Bahn, und insbesondere die daraus hergestellten Kraftfahrzeugsitzbezüge, eine bessere Festigkeit, insbesondere eine höhere Martindale-Scheuer-tourenzahl aufweisen, und somit ihr ursprüngliches Aussehen über eine lange Lebensdauer aufrechterhalten.

Diese Aufgabe wird erfindungsgemäß in überraschender Weise durch das Verfahren gemäß Anspruch 1 gelöst. Nicht erwarten konnte der Fachmann nämlich, dass die teilweise oder vollständige Beseitigung der Avivage(n), und somit die Entfernung der sog. Schutzhülle, zu einer besseren Festigkeit und insbesondere einer höheren Martindale-Scheuertourenzahl führt. Letzteres kann vorteilhafterweise mit chemischer Reinigung der textilen Bahn erzielt werden.

Ein weiterer Vorteil der Erfindung liegt darin, dass sich der Grad der Entfernung der Avivage(n) variierbar einstellen lässt, wodurch wiederum der Festigkeitsgrad bzw. die Martindale-Scheuertourenzahl wunschgemäß eingestellt werden kann.

Ebenso wird die Erfindung durch den im Anspruch 5 gekennzeichneten Sitzbezug gelöst.

Im Folgenden werden verschiedene Ausführungsbeispiele näher beschrieben, die die Art des Garnes und der Avivage(n) aufzeigen, die dann wiederum jeweils einer bestimmten Scheuertourenzahl für die textile Bahn als Endprodukt des erfindungsgemäßen Verfahrens zugeordnet sind.

Eine erfindungsgemäße textile Bahn wurde auf einer Rundstrickmaschine, es wäre auch eine Kettwirkware denkbar, wobei ein texturiertes und/oder Glattgarn verstrickt wird, hergestellt, wobei ein .Polyestergarn verstrickt wurde, das mit einem Gemisch von
a. Spinnavivage Stantex 3614 der Firma Pulcra Chemicals GmbH, Henkelstraße 67, 40589 Düsseldorf, und

b. Texturavivage/Spulöl Isafil OLB 2700 der Firma Dr. Böhme KG, Chemische Fabrik GmbH & Co, 82538 Geretsried,.1 zu 5 Gew.%% beschichtet war.

Bei der Spinnavivage können ca. 0,5 - 2% zum Einsatz gelangen, während die Texturvivage zwischen 0,5 und 3% liegt.

Die textile Bahn wurde anschließend in einer Lösung von Rucogen FWK (2g/l) bei einer Temperatur von 40°C über einen Zeitraum von 30 Minuten gewaschen. Mit einer Lösung von Perchlorethylen kann bei Bedingungen im Temperaturbereich von 20 - 50°C für ca. 5 Minuten chemisch gereinigt werden, um das Avivagengemisch schrittweise bis zur vollständigen Beseitigung zu entfernen. Andere Temperaturen und Zeiten sind denkbar. Der Waschvorgang an sich ist zeitlich variabel, er kann sowohl in einem Foulardverfahern, d.h. Durchlaufen des Stoffes, Verweilzeit im Bad <5 Minuten, bis hin zu einer voll-industriellen Waschbatterie ausgewaschen werden; die Verweildauer beträgt dann ein bis mehrere Stunden. Bei der chemischen Reinigung handelt es sich um ein kontinuierliches Verfahren. Eine diskontinuierliche Verfahrensweise ist auch denkbar. Die chemische Reinigung zeichnet sich dadurch aus, dass die Avivage komplett entfernt wird, d.h. die Verweilzeit richtet sich unter anderem nach der Menge an aufgetragener Avivage. Nach dem Waschen bzw. Reinigen der Ware erfährt diese eine übliche Endausrüstung, wie z.B. eine Trocknung in einem Spannrahmen bei einer Temperatur von 160°C. Je nach dem für das Garn eingesetzten Polymer variiert diese Temperatur. Die Schauertourenzahlen wurden jeweils ermittelt und sind in der nachfolgenden Tabelle angegeben:

**Tabelle 1**

| Restavivage | Martindale Scheuertouren |
|---|---|
| 0,39% | 40.000 |
| 0,21% | 45.000 |
| 0,14% | 50.000 |
| 0% | 105.000 |

Bei weiteren Versuchen mit anderen synthetischen Garntypen wie z.B. Polyamid oder Polypropylen und Avivage(n) wurden vergleichbare Ergebnisse erzielt.

Zusammenfassend wurde festgestellt, dass das erfindungsgemäße Verfahren zu einer textilen Bahn führt, bei der die Scheuertourenzahl im gewünschten Bereich eingestellt oder auch maximiert werden kann, sofern die Avivage(n) vollständig entfernt werden. Die erhöhten Martindale Scheuertourenzahlen sind bekanntermaßen ein Indiz dafür, dass die aus der textilen Bahn gefertigten Produkte gegenüber Abrieb stabiler sind und somit eine längere Lebensdauer aufweisen, was insbesondere bei Kraftfahrzeugsitzen oder auch Passagiersitzen im Flugzeit von Bedeutung ist.

## Patentansprüche

1. Verfahren zum Herstellen einer textilen Bahn für Sitzbezüge, insbesondere Strickgarn-Oberware für Kfz-Sitze, wobei die textilen Bahn aus einem oder mehreren Garnen hergestellt werden, das bzw. die mit einer oder mehreren Avivage(n) zur Verbesserung der Gleiteigenschaften und/oder Nadelkühlung und/oder Verringerung der statischen Garn-Aufladungsneigung aus einer oder mehreren Stoffen, wie Silikonen, Paraffinen, Wachsen, Ölen, Seifen, Kunststoffen und dgl., beschichtet sind, **dadurch gekennzeichnet, dass** die Avivage(n) teilweise oder vollständig aus der textilen Bahn entfernt werden, bevor die textile Bahn weiter verarbeitet wird.

2. Verfahren nach Anspruch 1, **dadurch gekennzeichnet, dass** die Entfernung der Avivage(n) mittels chemischer Reinigung der textilen Bahn durchgeführt wird.

3. Verfahren nach Anspruch 1 und 2, **dadurch gekennzeichnet, dass** die Scheuerfestigkeit, ermittelt nach sog. Martindale-Scheuertouren, von der textilen Bahn durch je nach dem Grad der Entfernung der Avivage(n) variierbar eingestellt wird.

4. Verfahren nach Anspruch 3, **dadurch gekennzeichnet, dass** die Scheuerfestigkeit durch vollständige Entfernung der Avivage(n) maximal erhöht wird.

5. Sitzbezug, insbesondere Strickgarnoberware für Kraftfahrzeugsitze, hergestellt aus Avivage(n) entfernter textiler Bahn, aufweisend eine Scheuerfestigkeit im Bereich von > 100.000 Martindale-Scheuertouren.

## Claims

1. Method for manufacturing a textile strip for seat coverings, in particular knitting yarn top web for motor vehicle seats, wherein the textile strips are produced from one or more yarns which are coated with one or more lubricating agent(s) to improve the gliding properties and or needle cooling and / or to reduce the static charge tendency of the yarn, said lubricating agent(s) comprising one or more substances such as silicones, paraffins, waxes, oils, soaps, plastics and similar, **characterised in that** the lubricating agent(s) is / are partially or fully removed from the textile strip before said textile strip undergoes further treatment.

2. Method according to claim 1, **characterised in that** the lubricating agent(s) is / are removed by means of chemical purification of the textile strip.

3. Method according to claim 1 or 2, **characterised in that** the abrasion resistance, determined according to so-called Martindale abrasion cycles, of the textile strip can be varied depending on the extent of removal of the lubricating agent(s).

4. Method according to claim 3, **characterised in that** the abrasion resistance is maximally increased by completely removing the lubricating agent(s).

5. Seat covering, in particular knitting yarn top web for motor vehicle seats, produced from a textile strip from which the lubricating agent(s) has / have been removed and which has an abrasion resistance in the region of > 100,000 Martindale abrasion cycles.

## Revendications

1. Procédé de fabrication d'une bande textile pour toiles de siège, en particulier revêtement de fil à tricoter pour sièges automobiles, la bande textile étant constituée d'un ou de plusieurs fils, enduits d'un ou de plusieurs avivages pour améliorer les propriétés de frottement et/ou le refroidissement des aiguilles et/ou réduire la propension des fils à se charger en électricité statique, avivages constitués d'un ou de plusieurs matériaux comme des silicones, des paraffines, des cires, des huiles, des savons, des matières synthétiques et autres, **caractérisé en ce que** le ou les avivages sont éliminés partiellement ou complètement de la bande textile avant la poursuite du traitement de la bande textile.

2. Procédé selon la revendication 1, **caractérisé en ce que** l'élimination du ou des avivages s'effectue par nettoyage chimique de la bande textile.

3. Procédé selon la revendication 1 et 2, **caractérisé en ce que** la résistance à l'abrasion, exprimée en tours Martindale, de la bande textile est réglable de façon variable selon le degré d'élimination du ou des avivages.

4. Procédé selon la revendication 3, **caractérisé en ce que** la résistance à l'abrasion est portée à son maximum par élimination complète du ou des avivages.

5. Toile de siège, en particulier revêtement de fil à tricoter pour sièges automobiles, composé d'une bande textile débarrassée du ou des avivages, présentant une résistance à l'abrasion supérieure à 100.000 tours Martindale.
